# EUROPEAN PATENT APPLICATION

(11) **EP 1 777 960 A1**
(43) Date of publication of application: **25.04.2007**
(21) Application number: 05768857.4
(22) Date of filing: 05.08.2005
(51) Int. Cl.: H04N 7/22, H04N 7/20, H04B 10/00, H04B 10/12

(54) **OPTICAL SIGNAL RECEIVER**

(30) Priority: 10.08.2004 JP 2004233774
(71) Applicant: NIPPON TELEGRAPH AND TELEPHONE CORPORATION, Tokyo 100-8116 (JP)
(72) Inventor: KIKUSHIMA, Koji, C/O NTT Intellectual Property Ctr, Musashino-shi, Tokyo 180-8585 (JP); IKEDA, Satoshi, C/O NTT Intellectual Property Ctr, Musashino-shi, Tokyo 180-8585 (JP)
(74) Representative: Beresford, Keith Denis Lewis
(86) International application number: PCT/JP2005/014447
(87) International publication number: WO 2006/016537

(57) **Abstract**

An optical signal receiver is provided for converting an optical signal being intensity-modulated with high frequency signals, to desired frequency electric signals for output. The optical signal receiver (50) according to the invention receives and converts an optical signal being intensity-modulated with high frequency signals such as a microwave or millimeter wave, to electric signals, which are converted to desired intermediate frequencies by a block down converter (52). By converting the high frequency signals to the desired intermediate frequencies, the transmission loss through transmission media such as a coaxial cable (60) can be reduced. Also, the high frequency characteristics required for an electric connector used at a connecting point with the transmission media are alleviated, so that an inexpensive connector can be used.

## Description

### TECHNICAL FIELD

The present invention relates to a technique for receiving an intensity-modulated optical signal, and particularly to a technique for receiving an optical signal being intensity-modulated with high frequency signals such as frequency-division multiplexed video signals.

### BACKGROUND ART

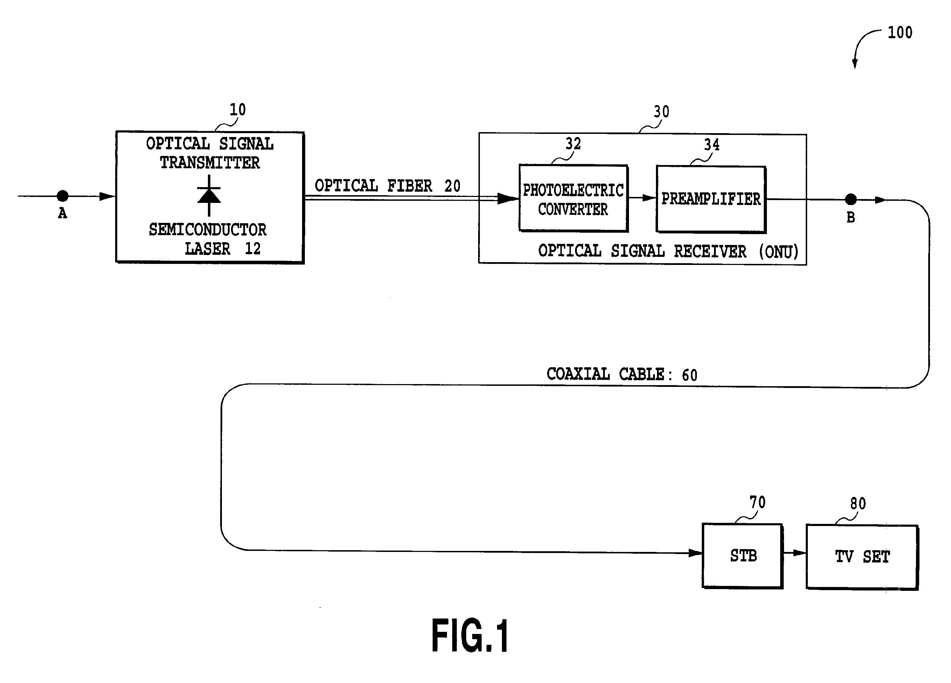

A video transmission system such as CATV usually uses optical fibers at its trunk system, and coaxial cables at its distribution system. For such system, the optical fiber transmission at the trunk system employs a frequency division multiplexing scheme for a variety of multichannel video signals, followed by intensity modulation of a semiconductor laser for transmission through the optical fiber. An exemplary configuration of such system is shown in FIG. 1.

The video transmission system 100 of FIG. 1 includes an optical signal transmitter 10 for transmitting to an optical fiber 20, an optical signal being intensity-modulated with frequency-division multiplexed multichannel video signals; the optical fiber 20 used for transmission at the trunk system; an optical signal receiver 30 for converting the optical signal received via the optical fiber 20 to electric signals for output; a coaxial cable 60 used for transmission at the distribution system; a set-top box (STB) 70 for demodulating an electric signal received via the coaxial cable 60; and a television set 80 for rendering the demodulated electric signal as pictures.

The conventional optical signal receiver 30 includes a photoelectric converter 32 for converting the optical signal received via the optical fiber 20 to electric signals, and a preamplifier 34 for amplifying the converted electric signals prior to the transmission through the coaxial cable. The photoelectric converter 32 converts the received optical signal to electric levels by a photoelectric device such as a photodiode (PD) or avalanche photodiode (APD), and outputs the electric signals in which multichannel video signals are frequency-division multiplexed. Such optical signal receiver is disclosed, for example, in a patent document 1.

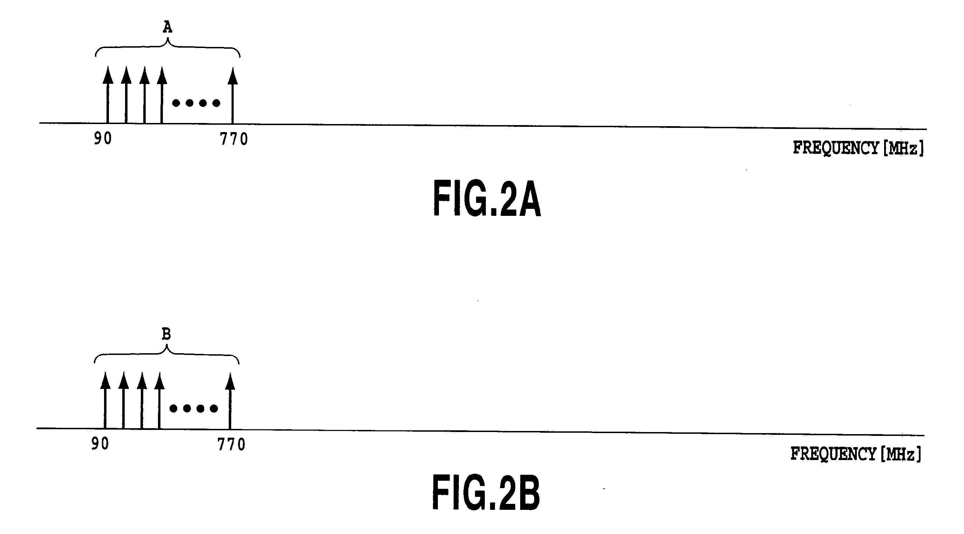

A video transmission system such as CATV transmits a variety of multichannel video signals, such as terrestrial video signals at VHF band and UHF band, through frequency-division multiplexing in a frequency range of 90-770 MHz. FIGs. 2A and 2B show electric signal spectra at points A and B of FIG. 1, respectively, in such video transmission system.

Satellite broadcasting video signals are at radio frequencies (RF) in an aerial wave radiated from a satellite, and are typically in a range of 11.7-12.8 GHz. The RF signals are typically received by a satellite antenna, and converted to intermediate frequency (IF) signals of 1.0-2.1 GHz, for demodulation by a set-top box or the like (patent document 2).

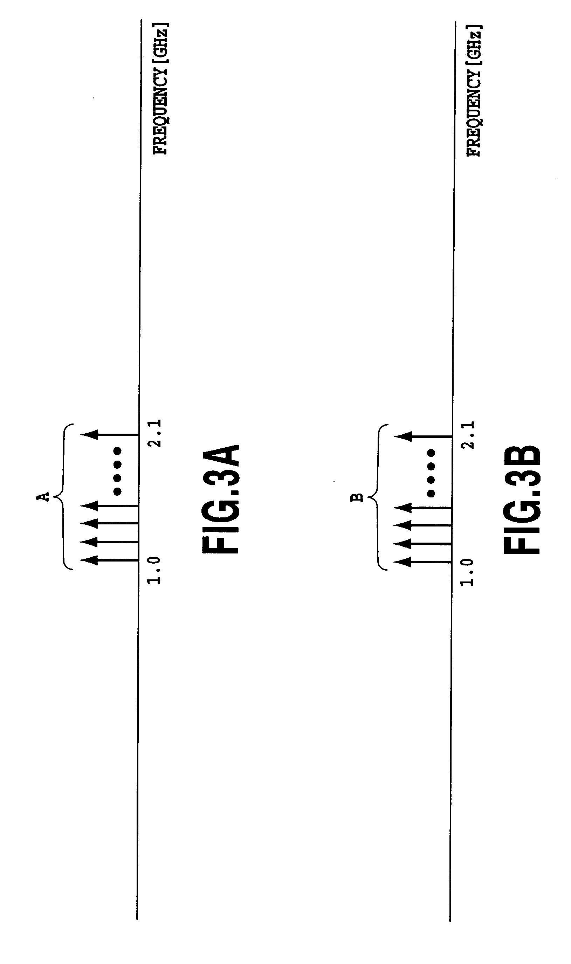

As such, a video transmission system, which uses optical fibers at a trunk system to carry satellite broadcasting multichannel video signals, employs a scheme for transmitting the multichannel video signals by converting the RF signals to the IF signals. FIGs. 3A and 3B show electric signal spectra at points A and B of FIG. 1, respectively, in such video transmission system.

In some cases, it is desirable to transmit the satellite broadcasting video signals in their original RF signal form by utilizing the broadband characteristic of the optical fiber transmission. For example, it is convenient to transmit the satellite broadcasting video signals in their original RF signal form, when other signals are to be multiplexed and transmitted and their frequency ranges are overlapped with the satellite broadcasting IF signals.

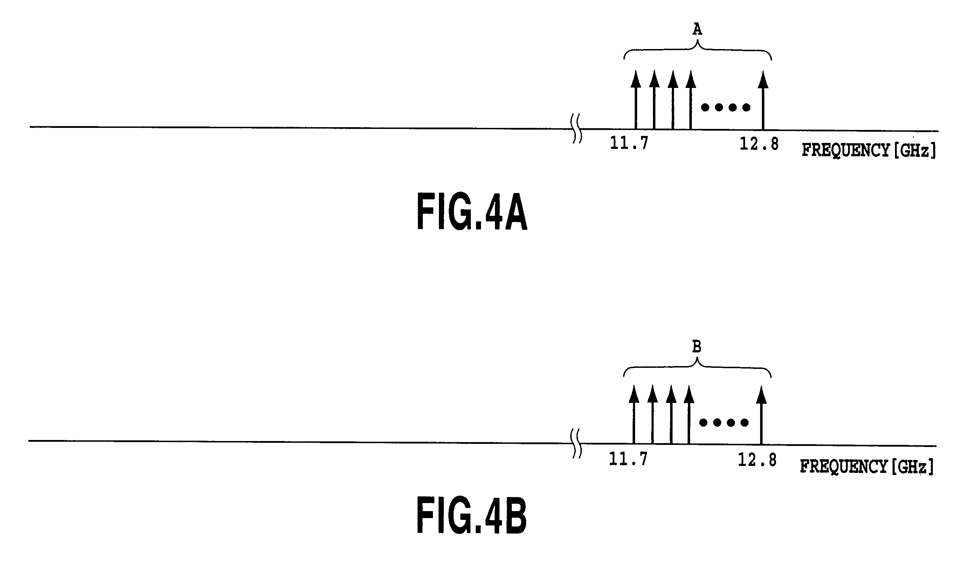

FIGs. 4A and 4B show electric signal spectra at points A and B, respectively, when the video transmission system of FIG. 1 transmits the satellite broadcasting video signals in their original RF signal form, for example, at the frequencies of 11.7-12.8 GHz.

In the configuration of FIG. 1, however, since the electric signal output from the optical signal receiver is at the high frequencies of 11.7-12.8 GHz, a problem arises that the transmission loss at the coaxial cable 60 between the optical signal receiver and set-top box becomes high. Also, there is another problem in that an electric connector used for a connection with the coaxial cable must be compatible with the high frequencies.

Not limited to the foregoing, when transmitting an optical signal being intensity-modulated with high frequency electric signals such as in a microwave band (3-30 GHz), or millimeter wave band (30-300 GHz) in the conventional configuration in general, the output of the optical signal receiver are the high frequency electric signals. When transmitting such high frequency electric signals with the coaxial cable, a problem arises that the transmission loss becomes high because of the frequency characteristics of the coaxial cable. Also, there is another problem in that an electric connector used for a connection with the coaxial cable must be compatible with the high frequency signals.

Patent Document 1: Japanese patent application Laid-open No. 5-252143
Patent Document 2: Japanese patent application Laid-open No. 8-330820

### DISCLOSURE OF THE INVENTION

The present invention is directed to an optical signal transmitter for transmitting an optical signal being intensity-modulated with high frequency electric signals, and an optical signal receiver for converting the optical signal to electric signals to attain an efficient transmission.

According to one aspect of the present invention, an optical signal receiver comprises: an optical-receiving means for receiving an optical signal, the optical signal being intensity-modulated with a high frequency electric signal; a photoelectric-converting means for converting the optical signal received by the optical-receiving means to electric signals; and a frequency-converting means for converting the electric signals converted by the photoelectric-converting means to lower frequencies.

According to another aspect of the present invention, in the optical signal receiver, the high frequency electric signals can be RF signals of satellite broadcasting.

According to still another aspect of the present invention, an optical signal transmitter comprises a modulation means for carrying out intensity modulation of an optical signal with RF signals of satellite broadcasting.

The optical signal transmitter according to the present invention enables the satellite broadcasting video signals to be transmitted in their original RF signal form utilizing the broadband characteristics of the optical fiber transmission. Also, the optical signal receiver according to the present invention enables a reduced transmission loss such as at the coaxial cable used for the transmission because the output electric signals have been converted to a lower frequency range. In addition, since the high frequency characteristics required for the components such as the coaxial cable and electric connectors are alleviated, less expensive components can be utilized.

### BRIEF DESCRIPTION OF THE DRAWINGS

[FIG. 1] FIG. 1 is a block diagram showing an exemplary configuration of an optical signal transmission system using a conventional optical signal receiver.
[FIG. 2A] FIG. 2A shows frequency spectra at point A in the exemplary configuration of FIG. 1, when transmitting frequency-division multiplexed signals in a frequency range of 90-770 MHz.
[FIG. 2B] FIG. 2B shows frequency spectra at point B in the exemplary configuration of FIG. 1, when transmitting the frequency-division multiplexed signals in the frequency range of 90-770 MHz.
[FIG. 3A] FIG. 3A shows frequency spectra at point A in the exemplary configuration of FIG. 1, when transmitting frequency-division multiplexed signals in a frequency range of 1.0-2.1 GHz.
[FIG. 3B] FIG. 3B shows frequency spectra at point B in the exemplary configuration of FIG. 1, when transmitting the frequency-division multiplexed signals in the frequency range of 1.0-2.1 GHz.
[FIG. 4A] FIG. 4A shows frequency spectra at point A in the exemplary configuration of FIG. 1, when transmitting frequency-division multiplexed signals in a frequency range of 11.7-12.8 GHz.
[FIG. 4B] FIG. 4B shows frequency spectra at point B in the exemplary configuration of FIG. 1, when transmitting the frequency-division multiplexed signals in the frequency range of 11.7-12.8 GHz.
[FIG. 5] FIG. 5 is a block diagram showing an exemplary configuration of an optical signal transmission system using an optical signal receiver according to the present invention;
[FIG. 6A] FIG. 6A shows frequency spectra at point A in the exemplary configuration of FIG. 5, when transmitting frequency multiplexed signals in a frequency range of 11.7-12.8 GHz as an optical signal, and converting the optical signal received by the optical signal receiver to electric signals for frequency-conversion to a frequency range of 1.0-2.1 GHz.
[FIG. 6B] FIG. 6B shows frequency spectra at point B in the exemplary configuration of FIG. 5, when transmitting frequency multiplexed signals in the frequency range of 11.7-12.8 GHz as the optical signal, and converting the optical signal received by the optical signal receiver to electric signals for frequency-conversion to the frequency range of 1.0-2.1 GHz.
[FIG. 6C] FIG. 6C shows frequency spectra at point C in the exemplary configuration of FIG. 5, when transmitting frequency multiplexed signals in the frequency range of 11.7-12.8 GHz as the optical signal, and converting the optical signal received by the optical signal receiver for frequency-conversion to the frequency range of 1.0-2.1 GHz.

### BEST MODE FOR CARRYING OUT THE INVENTION

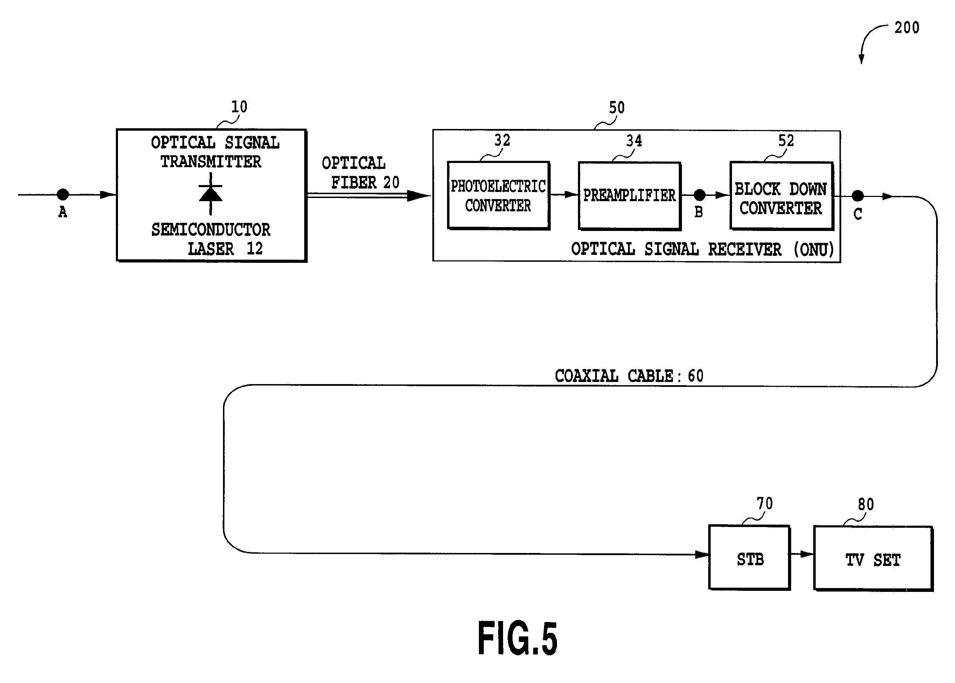

FIG. 5 shows a configuration of an optical signal transmission system 200 according to an embodiment of the present invention. The system comprises an optical signal transmitter 10 for transmitting an optical signal to an optical fiber 20, which has been intensity-modulated with high frequency electric signals; and an optical signal receiver 50 for converting the optical signal received via the optical fiber line 20 to electric signals for output.

To transmit video signals such as satellite broadcasting, frequency-division multiplexed video signals are provided to the optical signal transmitter 10. The output of the optical signal receiver 50 is connected to a set-top box (STB) 70 via a coaxial cable 60 so that a desired signal is selected from the frequency-division multiplexed video signals, and the selected video signal is demodulated for display on a television set 80.

Hereinafter, the embodiment of the present invention will be described assuming RF signals of multichannel satellite broadcasting video signals in 11.7-12.8 GHz as the input to the optical signal transmitter 10 and IF signals of the multichannel satellite broadcasting video signals in 1.0-2.1 GHz as the output of the optical signal receiver 50.

The present invention, however, can also be applied to more generic cases where high frequency electric signals are transmitted as intensity-modulated optical signals, and then converted to lower frequency electric signals for further transmission. Thus, the present invention is not limited to the following embodiment.

The RF signals (11.7-12.8 GHz) of the multichannel satellite broadcasting, which are frequency-division multiplexed, are entered into the optical signal transmitter 10, and are transmitted as optical signals, which are intensity-modulated by a semiconductor laser 12 and the like. The intensity-modulated optical signals are transmitted through the optical fiber 20, and are entered into the optical signal receiver (ONU) 50.

The optical signal receiver 50 comprises a photoelectric converter 32 for converting the optical signal received via the optical fiber 20 to electric signals; a preamplifier 34 for amplifying the converted electric signals as needed; and a block down converter 52 for frequency-converting the amplified electric signals to desired intermediate frequencies as needed.

The optical signal received via the optical fiber 20 is converted to the electric signals by the photoelectric converter 32 using a photodiode (PD) or avalanche photodiode (APD). The electric signals are amplified by the preamplifier 34 to desired amplitude, and then frequency-converted to the desired IF frequencies in block by the block down converter (LNB) 52.

The frequency converted signals are then transmitted to the set-top box via the coaxial cable 60 to be demodulated to the video signals. In this case, since the signals transmitted through the coaxial cable are frequency converted to the IF signals, the transmission loss through the coaxial cable 60 can be significantlyreduced, compared when transmitted as the RF signals. Also, as for the electric connector used for connecting the electric signals between the optical signal receiver and coaxial cable or between the coaxial cable and the STB, required frequency characteristics for the electric connector are significantly alleviated, compared with those for the RF signals.

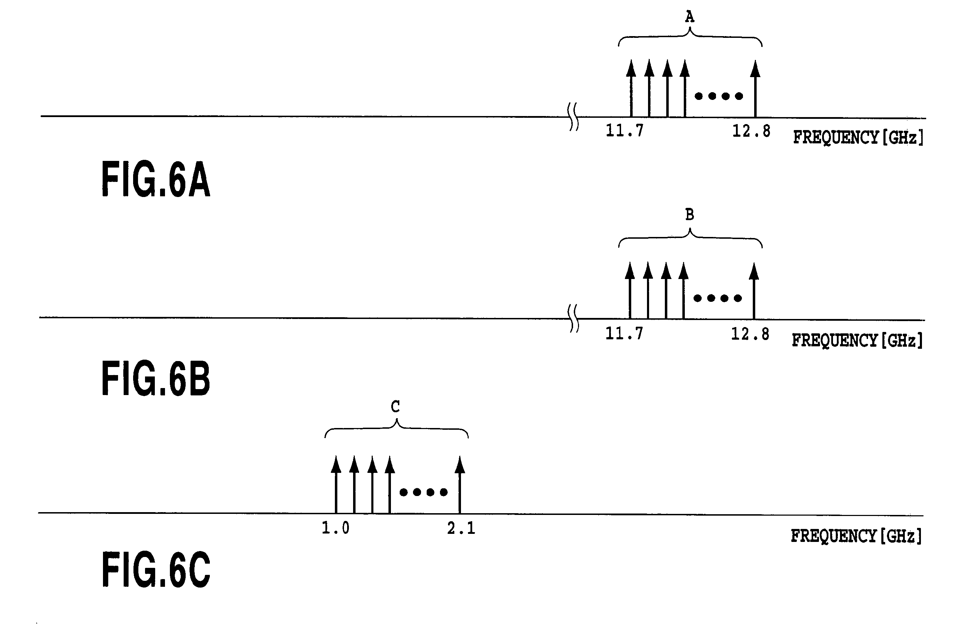

FIGs. 6A-6C show electric signal spectra at points A, B and C in the embodiment of FIG. 5, respectively. Note that, for the block down converter 52 of the optical signal receiver, the one used for a satellite television broadcasting antenna widely available today can be utilized. Using such block down converter, a low cost optical signal receiver can be designed. Also, using a standard block down converter, compatibility with the STB 70 can be ensured.

Furthermore, a filter can be provided at the subsequent stage of the photoelectric converter for passing signals in a desired frequency range. With this configuration, the signals in the desired frequency range can be extracted even when the electric signals after the photoelectric conversion includes some noise or are multiplexed with other signals. For the same reason, the photoelectric converter 32, preamplifier 34 and block down converter 52 can be designed with appropriate frequency selective characteristics.

While the foregoing embodiment is described taking, as an example, the RF signals of the multichannel satellite broadcasting video signals at 11.7-12.8 GHz as input to the optical signal transmitter 10, any high frequency signals may be used such as electric signals with frequencies in the microwave frequency band (3-30 GHz, SHF: Super High Frequency) or in the millimeter wave frequency band (30-300 GHz, EHF: Extremely High Frequency).

In addition, while the foregoing embodiment is described taking, as an example, the IF signals of the multichannel satellite broadcasting video signals at 1.0-2.1 GHz as output from the optical signal receiver 50, any desired IF frequencies may be used, and an appropriate frequencies can be determined depending on the scope and application of the transmission system, as well as on the characteristics of the transmission line of the coaxial cable.

The present invention has been described based on a specific embodiment. Considering a variety of possible configurations to which the principle of the invention may be applied, the embodiment described herein is for illustration purpose only, and is not intended to limit the scope of the invention. The embodiments illustrated herein can be modified in its configuration and in details without departing from the spirit of the invention. Furthermore, the components for illustration can be modified, supplemented, and/or changed in their order without departing from the spirit of the invention.

## Claims

1. An optical signal receiver comprising:
an optical-receiving means for receiving an optical signal, the optical signal being intensity-modulated with high frequency electric signals;
a photoelectric-converting means for converting the optical signal received by the optical-receiving means to electric signals; and
a frequency-converting means for converting the electric signals converted by the photoelectric converting means to lower frequencies.

2. The optical signal receiver as claimed in claim 1, wherein the high frequency electric signals are in a microwave frequency band or in a millimeter wave frequency band.

3. The optical signal receiver as claimed in claim 1 or 2, wherein the high frequency electric signals are frequency-division multiplexed electric signals.

4. The optical signal receiver as claimed in claim 1, wherein the high frequency electric signals are RF signals of satellite broadcasting.

5. The optical signal receiver as claimed in claim 4, wherein the electric signals converted by the frequency-convertingmeans are IF signals of the satellite broadcasting.

6. The optical signal receiver as claimed in claim 5, wherein the RF signals are in a frequency range from about 11.7 GHz to 12.8 GHz.

7. The optical signal receiver as claimed in claim 6, wherein the IF signals are in a frequency range from about 1.0 GHz to 2.1 GHz.

8. The optical signal receiver as claimed in any one of claims 1-7, further comprising a transmission means for transmitting via a coaxial cable the electric signals converted to the lower frequencies by the frequency-converting means.

9. An optical signal transmitter comprising a modulation means for intensity-modulating an optical signal with RF signals of satellite broadcasting.

10. The optical signal transmitter as claimed in claim 9, wherein the RF signals are in a frequency range from about 11.7 GHz to 12.8 GHz.
